# EUROPEAN PATENT SPECIFICATION

(11) **EP 2 013 146 B1**
(45) Date of publication and mention of the grant of the patent: **15.02.2012**
(21) Application number: 07713001.1
(22) Date of filing: 26.03.2007
(51) Int. Cl.: C02F 1/52, C02F 1/467, C02F 9/00, C02F 1/24, C02F 1/40, C02F 1/46, C02F 1/70, C02F 1/72

(54) **ELECTROLYTIC PROCESS FOR MANAGING URBAN SEWAGE**
ELEKTROLYTISCHES VERFAHREN ZUR BEWÄLTIGUNG VON STÄDTISCHEM ABWASSER
TRAITEMENT ÉLECTROLYTIQUE APPLICABLE AUX EAUX D'ÉGOUTS DES VILLES

(30) Priority: 07.04.2006 GR 20060100215
(43) Date of publication of application: 14.01.2009
(73) Proprietor: Ninolakis, Markos, 73 200 Chania (GR)
(72) Inventor: Ninolakis, Markos, 73 200 Chania (GR)
(74) Representative: Madgwick, Paul Roland
(86) International application number: PCT/GR2007/000021
(87) International publication number: WO 2007/116233

(56) References cited:
- EP-A- 1 564 187
- DE-A1- 10 133 269
- US-A- 5 531 865
- US-A1- 2001 050 258

## Description

### TECHNICAL FIELD

This invention relates to an electrolytic process for managing urban sewage.

### STATE OF THE ART

Urban sewage management is mainly performed so far by biological processes through development of proper microorganisms. Biological method with its all variants follows a concrete sewage flow and creates sewage sludge which is a great environmental problem. Furthermore, the biological method for urban sewage management is a process susceptible to climate changes and fails to apply at altitudes above 1000 m. Its response to differentiations of hydraulic-organic charge of sewage, because of its large period of adjustment is insufficient. Its reliability as to the effluent result is not so high and emission of odours is a usual phenomenon in the biological treatment of urban sewage, during the decontamination thereof organic chlorine compounds being usually produced.

### ADVANTAGES OF THE INVENTION

Electrolytic management of urban sewage with regard to its biological treatment is always a reliable process, is not affected by external factors as climate conditions and altitude, is adjusted immediately to variations of hydraulic charge of sewage flow, as well as to the increase of its organic charge, is economically advantageous and can be applied in the already existing works of biological treatment. The process can transform sewage, by the method of liquid oxidation of organic substances included in the urban sewage, to sterile water, lacking odours and within the limits stipulated by legislation for discharging, without creating sewage sludge, managing of the latter being one of the greatest environmental problems of the planet. Furthermore, from the hydrogen released during electrolysis, electric power can be produced by means of fuel cells. Due to being able to producing simultaneously ozone, atomic oxygen, hydrogen peroxide, chlorine oxide along with nascent chlorine, production of organic chlorine compounds is prevented.

### DESCRIPTION OF THE PROCESS

An aqueous solution of sodium chloride, conc. 0,5% to 10%, is carried into a tank intended for oxidant production. The solution reflows in the oxidant producing tank through an electrode by means of a pump. The electrode is supported by an electronically regulated DC power supply, volt. 5-60V, int. up to 1000 A. The NaCl solution is electrolyzed till receiving a concentration of 1000 mg - 9000 mg of oxidants per litre, expressed as free chlorine. The oxidants are forwarded to the urban sewage pump station by means of a dosage pump and are mixed with the urban sewage at a concentration of 5 mg/l to 200 mg/l. The sewage/oxidants solution is forwarded from the pump station by means of a litter pump to the sand sedimentation/equilibration tank and then passes through four successive self-cleansed grids with openings of 1,5 mm to 0,25 mm coming to a type DAFF defatting device. After coming out of DAFF, sewage passes through four self-cleansed filters with 150 µm to 5 µm meshes, respectively. The decontaminated and odourless gridates/filtrates are forwarded to a tank of continuous electrolysis to be oxidised in liquid state. The liquid sewage comes to the oxidation tank where a REDOX meter is situated measuring the residual oxidants in the sewage and transmitting the readings to the PLC. A dosage pump directed by the PLC forwards oxidants till their concentration in the sewage will reach 15 to 500 mg/l. By means of a pump, the treated sewage is forwarded to an electrode supported by an electronic DC power supply 5V - 60V, -1000 A, and during its passage through the electrode, is electrolysed under a voltage of 48V for further oxidation/degradation of the organic substances, the whole oxidants being subjected to an immediate neutralization by sodium sulphite when coming out of the electrode. Then, the treated sewage passes through an activated carbon filter and is discharged into the receiver.

### EXAMPLE

Nine hundred (900) litres of an aqueous sodium chloride solution, conc. 5%, are carried into a tank of an effective capacity of 1m³, and by means of a pump (26) are recirculated through an electrode (25), being an anode, as referred to in greek patent 201004008. The electrode is supported by a DC power supply (24), volt. -60 V and int. -1000 A. The aqueous solution of NaCl is electrolysed for six hours and the following oxidants are produced: nascent chlorine, nascent ozone, hydrogen peroxide, atomic oxygen and chlorine oxide at a concentration of 1000 mg/l to 9000 mg/l. Subsequently, the oxidants are forwarded by means of a pump (28) to the oxidant storage tank (29) of an effective capacity 2 m³. From the tank (29), the oxidants are forwarded by means of a dosage pump (31), flow rate 100 1/h, and are mixed with urban sewage in the pump station (1) situated before the sewage entrance of its treatment unit. Subsequently, the sewage, oxidised by nascent chlorine, nascent ozone, hydrogen peroxide, atomic oxygen and chlorine dioxide, enters by means of the pump (2) its treatment unit and comes to the sand sedimentation tank (3). The sewage comes, from the sand sedimentation tank (3) and by means of the pump (4), to four successive self-cleansed grids (5), with openings 1,5 mm, 0,75 mm, 0,50 mm, 0,25 mm respectively flowing freely to a type DAFF defatting system (6). After DAFF the sewage passes, by means of a pump (7), through four self-cleansed filters (8) with 100 µ, 75 µ, 30 µ, 5 µ meshes.

All gridates/filtrates reach a liquid oxidation tank (18) containing an aqueous solution of NaCl 6% and through a pump (17) the gridate/filtrate and brine mixture recirculates continuously and is electrolyzed by an electrode (16) supported by a DC power supply (15), volt. -60V and int. -1000 A. In the tank (18), there are float switches of upper (32) and lower level transmitting the readings to the PLC (36), which activates the pump (19) forwarding the oxidant-treated sewage mixture into the tank (20) where an immediate neutralization of all oxidants occurs on PLC command, receiving readings from the REDOX meter. The oxidant neutralization is realized by sodium sulfite, deriving from the tank (22) by a dosage pump (21). The liquid sewage having passed through the grids, DAFF and filters with oxidants therein, comes to a tank (9) for further oxidation. Inside the tank (9), a REDOX meter takes readings that transmits to the PLC (36) which, according to the oxidant concentration of the urban sewage, actuates a dosage pump (30) and oxidants from the oxidant storage tank (29) are forwarded to the further oxidation pump (9) till attaining an oxidant reading of 150 ppm expressed as free chlorine. The tank (9) has a sufficient capacity so that the sewage will remain therein for four hours, flowing thereafter freely into a tank (10). The oxidized sewage passes by means of a pump (11) through the electrode (13) supported by a power supply (12), -60V DC and - 300 A, providing an enhanced production of nascent ozone, hydrogen peroxide, oxygen roots and hydrogen to destroy any organic compounds, subjected to an immediate neutralization of all oxidants when coming out of the electrode by means of sodium sulfite entering the treated sewage flow from the tank (22) by means of the pump (23). Subsequently, the treated sewage passes through an activated carbon filter (14) and is discharged in the receiver.

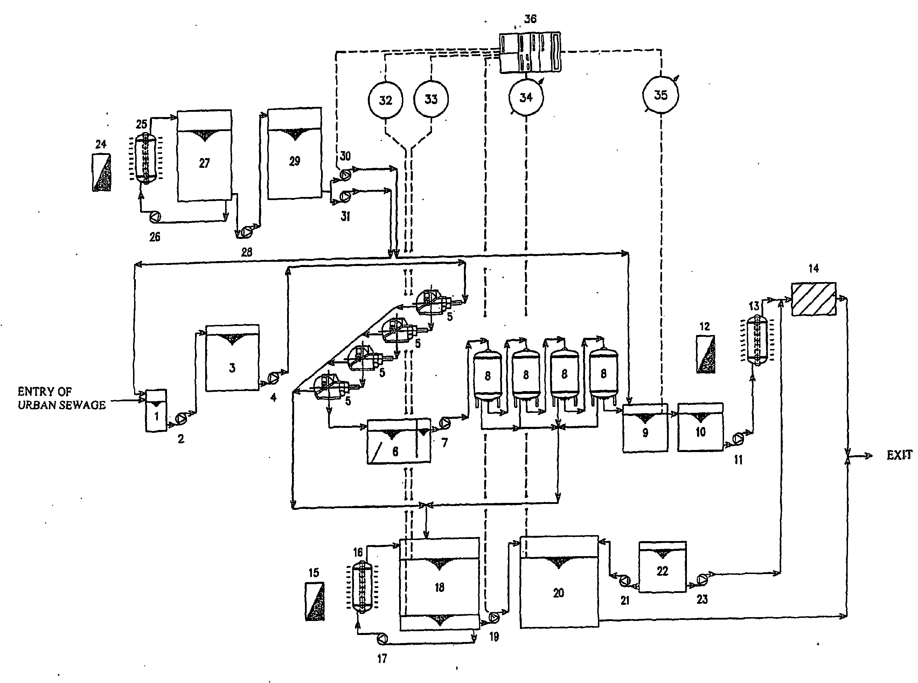

## Claims

1. An electrolytic process for managing urban sewage including:
a) producing an oxidative liquid by electrolyzing a 0.5% -10% aqueous solution of sodium chloride in a tank to produce a concentration of oxidants of 1000mg - 9000mg per litre expressed as free chlorine, such oxidants consisting of nascent ozone, nascent chloride, atomic oxygen chlorine dioxide, hydrogen peroxide;
b) mixing the oxidative liquid with the sewage to oxidize it in the liquid phase, thereafter passing the sewage-oxidant mixture into a treatment unit in which the following steps are performed:
c) subjecting the sewage-oxidant mixture to sand sedimentation, gadding, defatting further oxidation with more of said oxidative liquid, electrolysis under a high voltate exceeding 16V, followed by reduction with sodium sulfite;
d) oxidizing the gridates along with the filtrates in a special tank by continuous electrolysis followed by neutralization with sodium sulfite.

2. An electrolytic process for managing urban sewage according to claim 1, wherein the sewage-oxidant mixture entering the treatment unit, has an oxidant concentration expressed as residual free chlorine in the range 5 mg/l to 200 mg/l.

3. An electrolytic process for managing urban sewage according to claim 1, wherein the sewage-oxidant mixture during the sand sedimentation phase contains oxidants expressed as residual free chlorine from 5 mg/l to 200 mg/l.

4. An electrolytic process for managing urban sewage according to claim 1, wherein the sewage-oxidant mixture contains oxidants expressed as residual free chlorine from 5 mg/l to 200 mg/l and passes through self-cleansed grids with openings from 2,5 mm to 0,25 mm.

5. An electrolytic process for managing urban sewage according to claim 1, wherein the sewage-oxidant mixture during the defatting phase with a DAPF system, contains oxidants expressed as residual free chlorine from 5 mg/l to 200 mg/l.

6. An electrolytic process for managing urban sewage according to claim 1, wherein the sewage-oxidant mixture following the sand sedimentation gridding and defatting phases, contains oxidants expressed as residual free chlorine from 5 mg/l to 200 mg/l and passes through self-cleansed filters with meshes of 150 [mu] to 5 [mu].

7. An electrolytic process for managing urban sewage according to claim 1, wherein the gridates collected from the grids and the filtrates collected from the filters come into a tank containing an aqueous solution of NaCl 2-6% and are electrolyzed under a DC voltage 6 to 60, the oxidants contained therein being neutralized by sodium sulfite after getting out of the electrolyze tank.

8. An electrolytic process for managing urban sewage according to claim 1, wherein the sewage-oxidant mixture after defatting and removal of particles above 5 [mu] come to an oxidation tank where a REDOX meter and a pH meter give readings to a microprocessor adding oxidants from a storage tank thereof by means of a dosage pump till attaining an oxidant concentration in the sewage under treatment expressed as free chlorine from 15 mg/l to 500 mg/l.

9. An electrolytic process for managing urban sewage according to claim 1, wherein the sewage-oxidant mixture after remaining in the oxidation tank passes through the electrode under a DC voltage above 16V, being reduced by sodium sulfite when getting out of the electrode.

## Patentansprüche

1. Ein elektrolytisches Verfahren zur Bewältigung von städtischem Abwasser, umfassend:
a) Herstellung einer oxidativen Flüssigkeit durch Elektrolysieren einer wässrigen 0,5 bis 10 %-igen Natriumchloridlösung in einem Behälter, um eine Oxidantienkonzentration von 1000 mg bis 9000 mg pro Liter, ausgedrückt als freies Chlor, zu erzeugen, wobei die Oxidantien aus naszierendem Ozon, naszierendem Chlor, atomarem Sauerstoff, Chlordioxid, Wasserstoffperoxid bestehen,
b) Mischen der oxidativen Flüssigkeit mit dem Abwasser, um dieses in der flüssigen Phase zu oxidieren, gefolgt von dem Überführen des Abwasser/Oxidans-Gemisches in eine Behandlungseinheit, in der die folgenden Schritte durchgeführt werden:
c) Unterziehen des Abwasser/Oxidans-Gemisches einer Sandsedimentation, Gittersiebung bzw. Gridding, Entfettung, weiteren Oxidation mit einer zusätzlichen Menge der oxidativen Flüssigkeit, Elektrolyse unter einer Hochspannung von mehr als 16 V und einer nachfolgenden Reduktion mit Natriumsulfit,
d) Oxidation der Gitterdurahflüsse zusammen mit den Filtraten in einem Spezialbehälter durch kontinuierliche Elektrolyse und nachfolgender Neutralisation mit Natriumsulfit.

2. Das elektrolytische Verfahren zur Bewältigung des städtischen Abwassers nach Anspruch 1, wobei das in die Behandlungseinheit überführte Abwasser/Oxidans-Gemisch eine Oxidanskonzentration, ausgedrückt als freies Restchlor, im Bereich von 5 mg/l bis 200 mg/l aufweist.

3. Das elektrolytische Verfahren zur Bewältigung des städtischen Abwassers nach Anspruch 1, wobei das Abwasser/Oxidans-Gemisch während der Phase der Sandsedimentation 5 mg/ bis 200 mg/l an Oxidantien, ausgedrückt als freies Restchlor, enthält.

4. Das elektrolytische Verfahren zur Bewältigung des städtischen Abwassers nach Anspruch 1, wobei das Abwasser/Oxidans-Gemisch 5 mg/l bis 200 mg/l an Oxidantien, ausgedrückt als freies Restchlor, enthält und durch selbstreinigende Gitter mit Öffnungen von 2,5 mm bis 0,25 mm geleitet wird.

5. Das elektrolytische Verfahren zur Bewältigung des städtischen Abwassers nach Anspruch 1, wobei das Abwasser/Oxidans-Gemisch während der Phase der Entfettung mit einem DAPF-System 5 mg/l bis 200 mg/l an Oxidantien, ausgedrückt als freies Restchlor, enthält.

6. Das elektrolytische Verfahren zur Bewältigung des städtischen Abwassers nach Anspruch 1, wobei das Abwasser/Oxidans-Gemisch nach den Phasen der Sandsedimentation, der Gittersiebung bzw. des Gridding und der Entfettung 5 mg/l bis 200 mg/l an Oxidantien, ausgedrückt als freies Restchlor, enthält und durch selbstreinigende Filter mit Maschenweiten von 150 µm bis µm geleitet wird.

7. Das elektrolytische Verfahren zur Bewältigung des städtischen Abwassers nach Anspruch 1, wobei die von den Gittern gesammelten Gitterdurchflüsse und die von den Filtern gesammelten Filtrate in einen Tank, der eine wässrige 2-6 %-ige NaCl-Lösung enthält, gelangen und unter einer Gleichstromspannung von 6 bis 60 elektrolysiert werden, wobei die darin enthaltenen Oxidantien durch Natriumsulfit nach dem Verlassen des Elektrolysebehälters neutralisiert sind.

8. Das elektrolytische Verfahren zur Bewältigung des städtischen Abwassers nach Anspruch 1, wobei das Abwasser/Oxidans-Gemisch nach dem Entfetten und der Entfernung von Partikeln von mehr als 5 µm in einen Oxidationsbehälter gelangt, wo ein Redoxmessgerät und ein pH-Meter Messdaten an einen Mikroprozesser geben für die Zugabe von Oxidantien aus einem Vorratsbehälter durch eine Dosierungspumpe, bis eine Oxidanskonzentration in dem behandelten Abwasser, ausgedrückt als freies Chlor, von 15 mg/l bis 500 mg/l erreicht wird.

9. Das elektrolytische Verfahren zur Bewältigung des städtischen Abwassers nach Anspruch 1, wobei das Abwasser/Oxidans-Gemisch nach dem Verbleiben in dem Oxidationsbehälter unter einer Gleichstromspannung von mehr als 16 V durch die Elektrode geleitet wird und durch Natriumsulfit beim Verlassen der Elektrode reduziert ist.

## Revendications

1. Procédé électrolytique pour gérer les eaux d'égout des villes consistant à :
a) produire un liquide oxydatif en électrolysant une solution aqueuse à de chlorure de sodium à 0,5%-10% dans un réservoir pour produire une concentration d'oxydants de 100 mg - 9000 mg pour litre exprimée en chlore libre, ces oxydants comprenant l'ozone naissant, le chlore naissant, l'oxygène atomique, le dioxyde de chlore, le péroxyde d'hydrogène ;
b) mélanger le liquide oxydative aux eaux d'égout pour les oxyder dans la phase liquide, faire ensuite passer le mélange eaux d'égout-oxydant dans une unité de traitement dans laquelle sont réalisées les étapes consistant à :
c) soumettre le mélange eaux d'égout-oxydant à une sédimentation du sable, un tamisage, un dégraissage, une autre oxydation avec davantage dudit liquide oxydatif, une électrolyse sous une haute tension dépassant 16V, suivie par une réduction au sulfite de sodium ;
d) oxyder les tamisats conjointement avec les filtrats dans un réservoir spécial au moyen d'une électrolyse continue suivie d'une neutralization au sulfite de sodium.

2. Procédé électrolytique pour gérer les eaux d'égout des villes selon la revendication 1, dans lequel le mélange eaux d'égout-oxydant entrant dans l'unité de traitement a une concentration en oxydant exprimée en chlore libre résiduel dans la plage de 5 mg/l à 200 mg/l.

3. Procédé électrolytique pour gérer les eaux d'égout des villes selon la revendication 1, dans lequel le mélange eaux d'égout-oxydant pendant la sédimentation du sable contient des oxydants exprimés en chlore libre résiduel de 5 mg/l à 200 mg/l.

4. Procédé électrolytique pour gérer les eaux d'égout des villes selon la revendication 1, dans lequel le mélange eaux d'égout-oxydant contient des oxydants exprimés en chlore libre résiduel de 5 mg/l à 200 mg/l et passe à travers des tamis autocurés ayant des ouvertures de 2,5 mm à 0,25 mm.

5. Procédé électrolytique pour gérer les eaux d'égout des villes selon la revendication 1, dans lequel le mélange eaux d'égout-oxydant, pendant la phase de dégraissage avec un système DAPF, contient des oxydants exprimés en chlore libre résiduel de 5 mg/l à 200 mg/l.

6. Procédé électrolytique pour gérer les eaux d'égout des villes selon la revendication 1, dans lequel le mélange eaux d'égout-oxydant suite aux phases de sédimentation du sable, de tamisage et de dégraissage, contient des oxydants exprimés en chlore libre résiduel de 5 mg/l à 200 mg/I et passe à travers les filtres autocurés avec des mailles de 150 [mu] à 5 [mu].

7. Procédé électrolytique pour gérer les eaux d'égout des villes selon la revendication 1, dans lequel les tamisats collectés à partir des tamis et les filtrats collectés à partir des filtres entrent dans un réservoir contenant une solution aqueuse de NaCl 2-6 % et sont électrolysés sous une tension CC de 6 à 60, les oxydants contenus à l'intérieur étant neutralisés au moyen de sulfite de sodium une fois sortis du réservoir d'électrolyse.

8. Procédé électrolytique pour gérer les eaux d'égout des villes selon la revendication 1, dans lequel le mélange eaux d'égout-oxydant après dégraissage et élimination des particules dépassant 5 [mu] entre dans un réservoir d'oxydation où un dispositif de mesure REDOX et un dispositif de mesure de PH fournissent des valeurs de mesure à un microprocesseur ajoutant des oxydants provenant d'un réservoir de stockage de celui-ci au moyen d'une pompe de dosage jusqu'à obtenir une concentration en oxydant dans les eaux d'égout en cours de traitement exprimée en chlore libre de 15 mg/l à 500 mg/l.

9. Procédé électrolytique pour gérer les eaux d'égout des villes selon la revendication 1, dans lequel le mélange eaux d'égout-oxydant après un séjour dans le réservoir d'oxydation passe à travers l'électrode sous une tension CC supérieure à 16V, étant réduit par du sulfite de sodium lorsqu'il sort de l'électrode.
